# EUROPEAN PATENT APPLICATION

(11) **EP 4 679 329 A1**
(43) Date of publication of application: **14.01.2026**
(21) Application number: 25188722.0
(22) Date of filing: 10.07.2025
(51) Int. Cl.: G06N 3/0895, G06N 3/091, G06N 3/096, G06N 3/084

(54) **ACTIVE MACHINE LEARNING SYSTEM FOR ANOMALOUS EVENT DETECTION AND CLASSIFICATION IN INDUSTRIAL APPLICATIONS**

(30) Priority: 10.07.2024 US 202418768442
(71) Applicant: Robert Bosch GmbH, 70442 Stuttgart (DE)
(72) Inventor: GHAFFARZADEGAN, Luca, Livermore, CA 94550 (US); BONDI, Luca, Pittsburgh, PA 15218 (US); KUMAR, Abinaya, Pittsburgh, PA 15212 (US); WU, Ho -Hsiang, Morrisville, NC 27560 (US); LIN, Wei -Cheng, Pittsburgh, PA 15222 (US); DAS, Samarjit, Wexford, PA 15090 (US)
(74) Representative: Isarpatent

(57) **Abstract**

Active learning for anomalous event detection and classification in industrial applications. Initial samples from an industrial environment may be received. Unlabeled samples may then be classified using a target query strategy to determine the top-ranked relevant or most important samples. The top-ranked samples may then be manually annotated. A model may then be optimized based on the initial samples from the industrial environment and the annotated top-ranked samples. The model's performance may then be evaluated.

## Description

### TECHNICAL FIELD

Aspects of the disclosure generally relate to anomalous event detection and classification in industrial applications via an active machine learning system.

### BACKGROUND

Industrial machine monitoring helps to maintain operational efficiency and safety. Traditional monitoring methods rely on physical inspections and routine maintenance schedules, which may be resource-intensive and may not preemptively detect potential faults or anomalies. These methods may often be unable to identify subtle changes in machine behavior that may precede major malfunctions. Sensor-based monitoring systems may continuously collect data on machine performance and condition. However, the detection of anomalous operations or states that deviate from normal behavior remains a challenge. Conventional approaches, including both manual inspections and sensor-based monitoring, often fall short in accurately and efficiently identifying these anomalies. This may be true for rare or subtle anomalies that might not significantly impact the collected data's overall patterns.

### SUMMARY

In one or more illustrative examples, an active machine learning system and method for anomalous event detection and classification in industrial applications is performed by a computer-based machine. A first operation involves receiving samples recorded from a sensor in an industrial environment and ranking labeled samples based on a target query strategy implementing computational analysis to dynamically identify most important samples. A second operation involves facilitating manual annotation of the most important samples into annotated top-ranked labeled samples. A third operation involves optimizing and evaluating a model into an optimized model based on the initial samples and the annotated top-ranked labeled samples using a few-shot learning approach. The ranking, annotating, optimizing, and evaluating may be repeated with the optimized model until incremental gain in performance is within a minimum improvement criterion across two consecutive iterations. The active machine learning system or method may further include deploying the optimized model within the industrial environment, and having the optimized model relay detected and classified anomalous events to a monitoring system. The evaluation may include assessing the capability of the optimized model to detect true positives and true negatives. The minimum improvement criterion may be based in part on manual annotation resources. In some configurations, optimizing a model may include training a model. The labeling may be done via unsupervised audio retrieval with text prompts, unsupervised anomaly detection, or clustering methods. The target query strategy may be least confidence sampling, margin of confidence sampling, ratio sampling, or entropy sampling.

In one or more illustrative examples, a system for training a model for anomalous event detection in industrial applications, includes a sensor system that receives initial samples from an industrial environment and memory operable to store labeled initial samples with the model, wherein the labeled initial samples have been identified based on unsupervised detection of anomalous events. A processor may be configured to receive initial samples and implement a target query strategy to rank the initial samples, facilitate manual annotation of top-ranked samples, and optimize the model using a few-shot learning approach, utilizing both the initial samples and annotated top-ranked samples to update the model's parameters. The processor may be further configured to re-rank the initial samples using updated model parameters and facilitate manual annotation of re-ranked samples. The processor may be further configured to fine-tune the model further based on the few-shot learning approach, utilizing both initial samples and the labeled initial samples re-ranked samples to further refine the model's updated parameters. The target query strategy may be least confidence sampling, margin of confidence sampling, ratio sampling, or entropy sampling. The model's parameters may include weights that may be dynamically adjusted through a gradient descent optimization method during the few-shot learning phase. In some configurations, the sensor system includes one or more microphones in the industrial environment to capture audio data for anomalous event detection. In other configurations, the sensor system includes one or more accelerometers in the industrial environment to capture vibration data for anomalous event detection. In another configuration, the sensor system includes one or more thermal sensors in the industrial environment to capture thermal data for anomalous event detection. In yet another configuration, the sensor system includes one or more visual sensors placed in the industrial environment to capture visual data for anomalous event detection. In another configuration, the sensor system includes one or more pressure sensors in the industrial environment to capture pressure data for anomalous event detection. In yet another configuration, the sensor system includes one or more proximity sensors in the industrial environment for anomalous event detection.

In one or more illustrative examples, a non-transitory computer-readable medium comprising instructions for monitoring industrial applications via a model that, when executed by one or more hardware computing devices cause the one or more hardware computing devices to perform operations including to rank identified samples from an initial unlabeled data pool detected by a sensor system, wherein samples in the initial unlabeled data pool may be identified through unsupervised learning based on anomalies within individual samples, through a targeted query strategy, facilitate human annotation of ranked samples, and optimize a model using a few-shot learning technique based on the initial unlabeled data pool and human annotated ranked samples.

### BRIEF DESCRIPTION OF THE DRAWINGS

FIG. 1 illustrates an example active machine learning framework for optimizing a model for anomalous event detection and classification;
FIG. 2 illustrates an example process for performing active machine learning on a model for anomalous event detection and classification;
FIG. 3 illustrates an example input configuration for an active machine learning framework for anomalous event detection and classification; and
FIG. 4 illustrates an example computing device for performing active machine learning for anomalous event detection and classification.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Anomalous Sound Detection and Classification (ASDC) systems may be designed for monitoring the operational health of industrial machinery. ASDC systems may be employed across various sectors, including healthcare, machine monitoring, and audio surveillance, offering a cost-effective solution for early fault and threat detection. The efficacy of ASDC relies on access to extensive, annotated audio data. Annotations may be done by manual labeling, which may be labor-intensive and prone to inaccuracies, or web-sourced audio, which may carry noisy and imprecise metadata. The rarity of anomalous sounds complicates collection efforts, as they may be difficult to obtain without resorting to impractical destructive testing, and often require expert knowledge for accurate annotation.

Given these challenges, unsupervised anomaly detection techniques are needed. These methods, face difficulties in distinguishing highly similar anomaly samples and may not perform well in scenarios where the data distribution deviates significantly from the training set, such as with changes in environmental conditions or machine operations. To address these issues, semi-supervised learning approaches have been explored to reduce the need for resource intensive annotation and improve model adaptability to new anomalies and operational conditions using minimal labeled examples.

Active machine learning may be used as a technical solution to optimize the cost-efficiency of labeling while enhancing model performance. Active machine learning applies iterative training with the most informative samples, a method yet to be fully explored in the context of machine health monitoring due to the high costs associated with identifying and labeling anomalous data. In industrial applications, employing acoustic sensors to collect audio data presents multiple challenges. These include the difficulty of distinguishing between normal and anomalous sounds amidst a typically noisy background, the vast amount of data that requires processing, and the risk of mislabeling data due to the subtlety of anomalies. These challenges underscore the value of active machine learning in these scenarios to improve model training by efficiently identifying and learning from the most informative data points.

In one or more embodiments, the disclosure relates to an active machine learning strategy for improving anomaly detection and classification in audio data, aiming to enhance model accuracy while minimizing manual labeling. This process begins with the exploration of unlabeled data, either through unsupervised audio retrieval using text prompts or through anomaly detection and clustering methods. Audio samples may then be ranked according to a predefined query strategy, employing techniques such as least confidence sampling, margin of confidence sampling, ratio sampling, or entropy sampling. A request may be made for a human expert to annotate a selected number of high-priority samples, the volume of which may be determined by the available time resources of the annotator. The process proceeds with training or fine-tuning the anomaly detection and classification model using the mix of unlabeled data and the newly annotated examples, applying few-shot learning techniques to improve efficiency. Samples may then be re-evaluated and re-ranked based on the insights from the updated model, following the chosen query strategy. This cycle of annotation and model refinement may repeat as needed, within the limits of the annotation budget, to reach the target model accuracy.

For initial data exploration and model refinement, several methods may be used. One example method involves employing pre-trained models for zero-shot audio sample retrieval, which allows for the identification of specific audio events from data streams. Pre-trained audio neural networks (PANNs), utilizing a convolutional neural network (CNN) architecture and trained on the AudioSet database with 527 output classes, may serve as an example of such pre-trained models. However, this method may be limited by the fixed output classes of the model and its adaptability under various conditions. Another method may involve, Contrastive Audio Language Pre-training (CLAP), which may be selected for its performance in audio-related tasks through zero-shot classification and retrieval enabled by text prompts. The CLAP model, trained on a large set of audio-text pairs using contrastive loss, facilitates a more flexible interaction between users and the model, overcoming the limitations of fixed output classes inherent in audio-only pre-trained models.

For unsupervised or semi-supervised anomaly detection in industrial settings, effectively identifying anomalous sounds may be important for refining training models. For the initial data exploration and later stages of model tuning, networks like the Deviation Network (DevNet), originally developed for few-shot anomaly detection in image processing, may be adapted for audio applications. DevNet evaluates anomaly scores in an end-to-end manner, serving as an effective ranking mechanism within the active machine learning framework. By initially treating all samples as normal, DevNet adjusts anomaly scores with each iteration based on the limited annotated examples.

In situations where labeled data includes multiple classes of interest, a few-shot classification approach may be employed to detect sound events across different categories simultaneously. ProtoNet, a model used in this context, builds class prototypes from the embeddings of a few labeled samples. During inference, the embedding of a query sample may be compared against these prototypes to determine the closest class match, allowing for accurate classification across various sound categories with a minimal number of labeled examples.

The active machine learning framework may be applied across various modalities of data, including thermal, vibration, visual, pressure, or proximity sensor data. The methodologies within the active machine learning framework remain the same regardless of the modality of the data. This universal applicability allows the framework to be utilized for anomaly detection and classification across a broad spectrum of industrial applications.

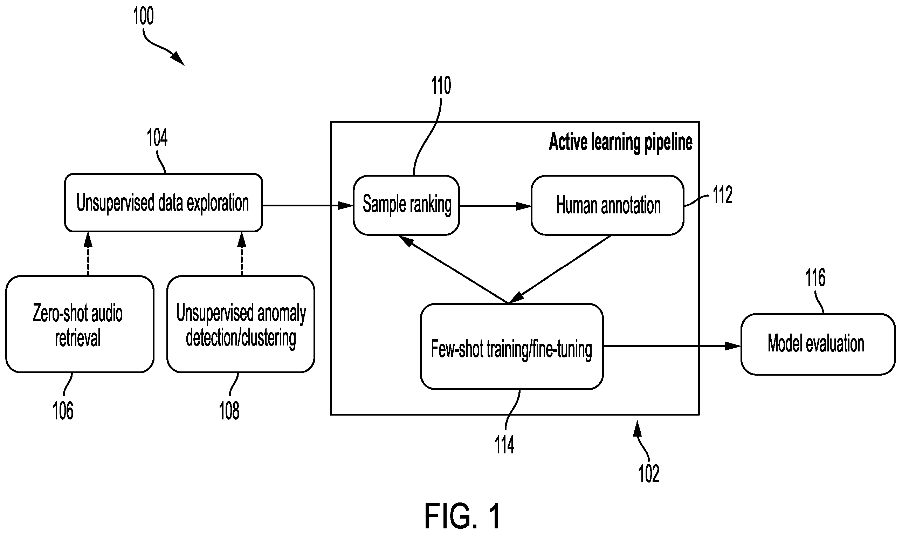

FIG. 1 shows an active machine learning framework 100 including an active machine learning pipeline 102 for an anomalous event detection and classification model, for industrial environments. A series of iterative steps within the active learning framework 100 comprise an active learning pipeline 102, to enhance machine learning models with minimal reliance on human-labeled data.

The initial phase of the active machine learning framework 100 may be the unsupervised exploration of data as set forth in step 104. The data may be a pool of audio data, accelerometer data, thermal sensor data, visual sensor data, pressure sensor data, proximity sensor data, or data received from any suitable industrial sensor monitoring system. This operation may utilize multiple approaches. One example approach may be zero-shot retrieval as set forth in step 106, which applies a pre-trained model to extract events directly from data streams, based on the pre-trained model's existing class definitions. Another example approach as set forth in step 108 involves unsupervised techniques for anomaly detection and clustering, where an algorithm autonomously identifies potential anomalies or patterns in the data without predefined labels.

After the unsupervised exploration operation identified samples of data 104 may then be fed into the active machine learning pipeline 102 for an anomalous event detection and classification model. The first operation in the active machine learning pipeline 102 may be the sample ranking process as set forth in step 110. In the sample ranking process of step 110, identified samples may then be ordered by relevance, employing query strategies. The query strategies may be least confidence sampling, margin sampling, ratio sampling, and entropy sampling. These strategies may then be designed to prioritize samples that the anomalous event detection and classification model finds uncertain or those that represent the most information gain. Human annotation as set forth in step 112 may be the next operation in the active machine learning pipeline 102. Here, an expert annotator reviews and labels the highest-ranked samples. The selection of samples for annotation may be dependent on the annotator's capacity and the time resources available. The annotator's capacity and the time resources available may also partly determine an incremental gain value, serving as the minimum improvement criterion across two consecutive iterations of the active machine learning pipeline 102. This human annotation as set forth in step 112 may include labeling events and adding metadata descriptors to the highest-ranked samples, providing detailed contextual information that may enhance the anomalous event detection and classification model model's ability to accurately detect and classify anomalies.

The contents of these annotations may depend on the modality of the data detected. For audio data, the annotations may be labels identifying specific sounds or anomalies such as unusual machine noise, breakdown sounds, or operational irregularities that may be characteristic of mechanical faults. For thermal data, the annotations may involve categorizing temperature ranges or patterns that indicate overheating, cooling failures, or other thermal anomalies affecting machinery performance. For vibration data, annotations might specify the nature and severity of vibrational anomalies, differentiating between normal operational vibrations and those indicative of wear, misalignment, or structural issues. For visual data, the annotations may detail visual signs of equipment deterioration, such as rust, leakage, or component wear. For pressure data, annotations may define normal and abnormal pressure levels or fluctuations that suggest leaks, blockages, or failures in pressure-dependent systems. For proximity sensor data, annotations might identify the proximity readings associated with normal operation versus those readings that signal obstructions, misalignments, or the presence of foreign objects in areas of interest.

The annotated data then feeds into a few-shot training or fine-tuning operation of the classification model as set forth in step 114. In this part of the active machine learning pipeline 102, the anomalous event detection and classification model may be optimized to learn from a limited set of labeled examples, thus reducing the need for large annotated datasets. Few-shot learning methodologies enable training of the anomalous event detection and classification model to effectively adapt to new data with only a few annotations. Fine-tuning methodologies allow for optimization of the anomalous event detection and classification model to further refine the model's parameters. The anomalous event detection and classification model may also be re-iterated through the active machine learning pipeline 102. The anomalous event detection and classification model's performance may be evaluated in an evaluation operation as set forth in step 116 to ensure it meets the necessary criteria for accuracy and reliability in detecting and classifying events. Based on the evaluation operation in step 116 the anomalous event detection and classification model may also be re-iterated through the active machine learning pipeline 102. The evaluation operation in step 116 may include assessing the anomalous event detection and classification model's capability to detect true positives and true negatives. True positives signify correctly identified anomalies, while true negatives denote accurately recognized normal events, reflecting the anomalous event detection and classification model's precision. Further parameters may also be used in the evaluation operation 116 such as false positives, where normal events may be incorrectly identified as anomalies, and false negatives, where anomalies may be missed and mistakenly classified as normal.

The iterative nature of the active machine learning pipeline 102 allows for repeated cycles of the sample ranking process 110 based on the optimized anomalous event detection and classification model, further human annotation as set forth in step 112 as necessary, and further optimizing the optimized anomalous event detection and classification model as set forth in step 114, facilitating continuous improvement of the anomalous event detection and classification model's performance. The repeated cycles of the active machine learning pipeline 102 allows the anomalous sound event detection and classification model to begin with a general overview of the data, and progressively focus on the most informative samples. The adaptability of the active machine learning pipeline 102 may be advantageous for industrial settings, allowing for constant adjustment to varying machine conditions and operational environments. By utilizing a model that enhances its understanding of anomalies through iterative learning, the machine learning framework 100 incorporates efficient strategies for distinguishing between various anomalous events. This active machine learning framework 100 reduces the labeling workload and provides a scalable solution for monitoring the health and status of machinery in industrial contexts.

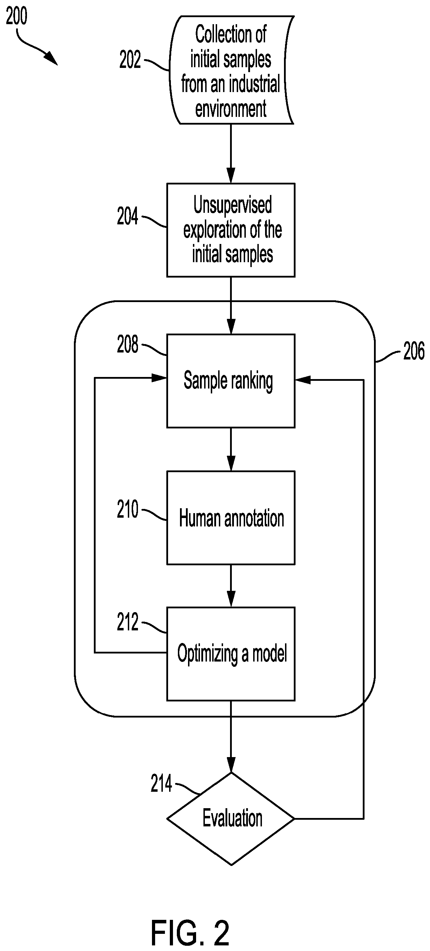

FIG. 2 illustrates a process 200 as an example for performing an active machine learning method for anomalous event detection and classification in industrial applications. In an example, the process 200 may be performed as a semi-automated process executed by one or more computing devices with minimal user involvement. The process 200 begins with the collection of initial samples from an industrial environment via a suitable sensor system as set forth in step 202. The sensor system may be any type of sensor system capable of capturing a variety of data types, including audio, vibration, thermal, visual, pressure, and proximity sensor data. These initial samples undergo unsupervised exploration of the initial samples as set forth in step 204 utilizing techniques such as zero-shot retrieval and unsupervised anomaly detection and clustering to identify potential anomalies or patterns without predefined labels. Following the unsupervised data exploration, the active machine learning pipeline 206 commences with a sample ranking process as set forth in step 208, where samples may be ordered by their relevance to the anomaly detection task. This ranking may be based on query strategies such as least confidence sampling, margin sampling, ratio sampling, and entropy sampling.

The highest-ranked samples may then be presented for human annotation as set forth in step 210, where expert annotators label the data according to the specific modalities (e.g., specifying event types for audio data, anomaly categories for thermal data, or condition states for vibration data). The annotated samples feed into the few-shot training or fine-tuning as set forth in step 212, enabling an anomalous event detection and classification model to learn from a limited number of labeled examples and adapt to new data efficiently. This fine-tuning step 212 optimizes the anomalous event detection and classification model's parameters, including dynamically adjusting weights through methods such as gradient descent optimization. The optimized model undergoes evaluation as set forth in step 214 to ensure its accuracy and reliability in detecting and classifying events. If necessary, based on evaluation step 214 or if a remaining training budget allows, the active machine learning pipeline 206 re-iterates with repeating sample ranking process 208 using the updated model parameters, followed by repeating human annotation 210 and further fine-tuning step 212. This iterative cycle of evaluation step 214 allows for continuous improvement and adaptation to changing conditions in the industrial environment, thereby enhancing the model's performance over time. This process 200 provides a scalable solution for monitoring machinery health and operational status, leveraging advanced models and efficient strategies for distinguishing between different events and anomalies in various data modalities.

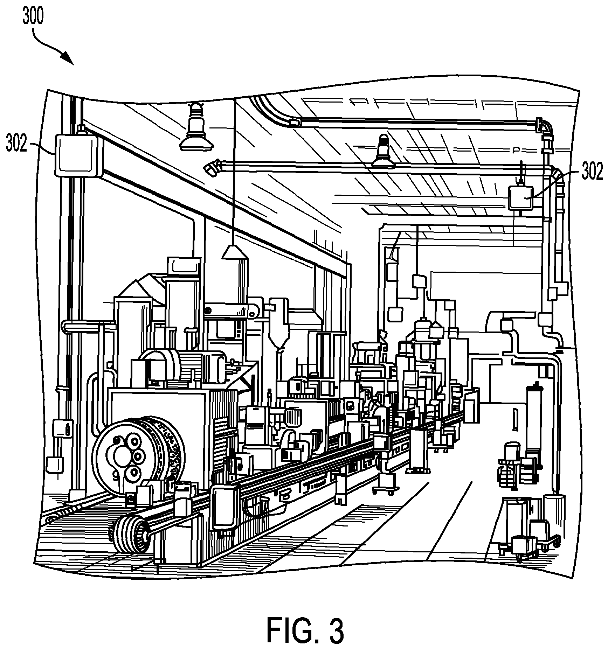

FIG. 3 illustrates an example of an industrial setting 300 where the active learning method for anomaly detection and classification using the active machine learning framework 100 may be applied, a sensor system 302 designed to monitor the health and operational status of machinery may be integrated into the industrial setting. In this setting, the sensor system may contain specific type of sensors, such as audio sensors, vibration sensors, thermal sensors, visual cameras, pressure sensors, or proximity sensors, each selected based on the particular monitoring needs of the environment.

For instance, the sensor system 302 may utilize audio sensors to capture sounds from machinery, identifying unusual noises that indicate mechanical issues. Alternatively, it might employ vibration sensors to monitor changes in equipment's vibrational patterns, thermal sensors to detect overheating, or visual sensors to observe physical conditions not evident through other data types. a combination of these sensor types may also be employed simultaneously. This multi-sensor approach allows for the comprehensive monitoring of machinery, capturing a broad spectrum of data to feed into the active machine learning pipeline.

The collected data undergoes unsupervised exploration to identify potential anomalies, followed by a sample ranking process, expert annotation, and few-shot model training. This iterative process, allows for continuous improvement of a model's performance in real-time anomaly detection and classification, adapting to the specific monitoring requirements and operational conditions of the industrial environment.

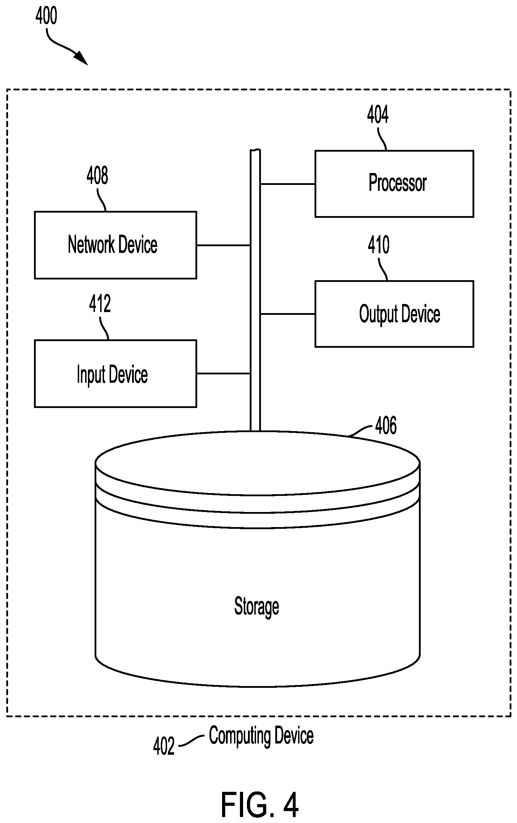

FIG. 4 illustrates an example 400 of a computing device 402 for anomalous event detection and classification via active machine learning. As shown, the computing device 402 includes a processor 404 that may be operatively connected to a storage 406, a network device 408, an output device 410, and an input device 412. FIG. 4 denotes merely an example, and computing devices 402 with more, fewer, or different components may be used.

The processor 404 may include one or more integrated circuits that implement the functionality of a central processing unit (CPU) and/or graphics processing unit (GPU). In some examples, the processors 404 may be a system on a chip (SoC) that integrates the functionality of the CPU and GPU. The SoC may optionally include other components such as, for example, the storage 406 and the network device 408 into a single integrated device. In other examples, the CPU and GPU may be connected to each other via a peripheral connection device such as peripheral component interconnect (PCI) express or another suitable peripheral data connection. In one example, the CPU may be a commercially available central processing device that implements an instruction set such as one of the x86, ARM, Power, or microprocessor without interlocked pipeline stage (MIPS) instruction set families.

Regardless of the specifics, during operation the processor 404 executes stored program instructions that may be retrieved from the storage 406. The stored program instructions, accordingly, include software that controls the operation of the processors 404 to perform the operations described herein. The processor 404 may execute complex algorithms that may be involved in unsupervised data exploration, sample ranking, and few-shot learning model optimization. The storage 406 may include both non-volatile memory and volatile memory devices. The non-volatile memory includes solid-state memories, such as not and (NAND) flash memory, magnetic and optical storage media, or any other suitable data storage device that retains data when the system may be deactivated or loses electrical power. The volatile memory includes static and dynamic random-access memory (RAM) that stores program instructions and data during operation of the active machine learning framework 100. The network device 408 may be in communication with sensor system 302 storing sensor data received in the storage 406. Alternatively, the storage 406 may already contain sensor data from the sensor system 302.

The GPU may include hardware and software for display of at least two-dimensional (2D) and optionally 3D graphics to the output device 410. The output device 410 may be configured to present data from sensor system 302 and the results of an anomaly detection and classification process in an understandable format for human operators. The output device 410 may include a graphical or visual display device, such as an electronic display screen, projector, printer, or any other suitable device that reproduces a graphical display. As another example, the output device 410 may include an audio device, such as a loudspeaker or headphone. As yet a further example, the output device 410 may include a tactile device, such as a mechanically raiseable device that may, in an example, be configured to display braille or another physical output that may be touched to relay information to a user.

The input device 412 may include any of various devices that enable the computing device 402 to receive control input from users. The input device 412 enables users to interact with the computing device, to configure an active machine learning process, annotate samples and refine operational parameters of a model based on performance evaluations. Examples of suitable input devices that receive human interface inputs may include keyboards, mice, trackballs, touchscreens, voice input devices, graphics tablets, and the like.

The network devices 408 may each include any of various devices that enable the devices to send and/or receive data from external devices over networks. Examples of suitable network devices 408 include an Ethernet interface, a Wi-Fi transceiver, a cellular transceiver, or a BLUETOOTH or BLE transceiver, UWB transceiver, or other network adapter or peripheral interconnection device that receives data from another computer or external data storage device, which may be useful for receiving large sets of data in an efficient manner.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as read-only memory (ROM) devices and information alterably stored on writeable storage media such as floppy disks, magnetic tapes, compact discs (CDs), RAM devices, and other magnetic and optical media. The processes, methods, or algorithms can also be implemented in a software executable object. Alternatively, the processes, methods, or algorithms can be embodied in whole or in part using suitable hardware components, such as application specific integrated circuit (ASIC), field-programmable gate array (FPGA), state machines, controllers or other hardware components or devices, or a combination of hardware, software, and firmware components.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property may be determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular may be intended to comprise a plurality of components.

The term "comprising" is synonymous with "including," "having," "containing," or "characterized by." These terms are inclusive and open-ended and do not exclude additional, unrecited elements or method steps. The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole. The phrase "consisting essentially of" limits the scope of a claim to the specified materials or steps, plus those that do not materially affect the basic and novel characteristic(s) of the claimed subject matter. The term "one or more" means "at least one" and the term "at least one" means "one or more." The terms "one or more" and "at least one" include "plurality" as a subset.

The following application is related to the present application: U.S. Patent Application Serial No. 18/768,409 filed on July 10, 2024 (RBPA0487PUS), which is incorporated by reference in its entirety.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. An active learning method for anomalous event detection and classification in industrial applications performed by a computer-based machine comprising:
receiving samples recorded from a sensor in an industrial environment;
ranking labeled samples based on a target query strategy implementing computational analysis to dynamically identify most important samples;
facilitating manual annotation of the most important samples into annotated top-ranked samples;
optimizing and evaluating a model into an optimized model based on the samples recorded from a sensor in an industrial environment and the annotated top-ranked samples using a few-shot learning approach;
repeating the ranking, annotating, optimizing, and evaluating with the optimized model until incremental gain in performance is within a minimum improvement criterion across two consecutive iterations; and
detecting an anomalous event and classifying the anomalous event using the optimized model.

2. The method of claim 1, further comprising deploying the optimized model within the industrial environment, wherein the optimized model relays detected and classified anomalous events to a monitoring system.

3. The method of claim 1 wherein evaluating includes assessing capability of the optimized model to detect true positives and true negatives.

4. The method of claim 1 wherein the minimum improvement criterion is based in part on manual annotation resources.

5. The method of claim 1 wherein the optimizing includes training the model.

6. The method of claim 1 wherein the labeling is done via unsupervised audio retrieval with text prompts, unsupervised anomaly detection, or clustering methods.

7. The method of claim 1 wherein the target query strategy is least confidence sampling, margin of confidence sampling, ratio sampling, or entropy sampling.

8. A system for training a model for anomalous event detection in industrial applications, comprising:
a sensor system configured to collect initial samples from an industrial environment;
memory operable to store labeled initial samples with the model, wherein the labeled initial samples have been identified based on unsupervised detection of anomalous events;
a processor configured to:
receive initial samples and implement a target query strategy to rank the initial samples,
facilitate manual annotation of top-ranked samples,
optimize the model using a few-shot learning approach, utilizing both the initial samples and annotated top-ranked samples to update parameters of the model, and
detect and classify an anomalous event using the model.

9. The system of claim 8 wherein the processor is further configured to re-rank the initial samples using updated model parameters.

10. The system of claim 9 wherein the processor is further configured to facilitate manual annotation of re-ranked samples.

11. The system of claim 10 wherein the processor is further configured to fine-tune the model further based on the few-shot learning approach, utilizing both initial samples and the re-ranked samples to further refine the model's updated parameters.

12. The system of claim 8 wherein the target query strategy is least confidence sampling, margin of confidence sampling, ratio sampling, or entropy sampling.

13. The system of claim 8 wherein parameters of the model include weights that are dynamically adjusted through a gradient descent optimization method during the few-shot learning approach.

14. The system of claim 8 wherein the sensor system includes one or more microphones in the industrial environment to capture audio data for anomalous event detection.

15. The system of claim 8 wherein the sensor system includes one or more accelerometers in the industrial environment to capture vibration data for anomalous event detection.

16. The system of claim 8 wherein the sensor system includes one or more thermal sensors in the industrial environment to capture thermal data for anomalous event detection.

17. The system of claim 8 wherein the sensor system includes one or more visual sensors placed in the industrial environment to capture visual data for anomalous event detection.

18. The system of claim 8 wherein the sensor system includes one or more pressure sensors in the industrial environment to capture pressure data for anomalous event detection.

19. The system of claim 8 wherein the sensor system includes one or more proximity sensors in the industrial environment for anomalous event detection.

20. A non-transitory computer-readable medium comprising instructions for monitoring industrial applications via a model that, when executed by one or more hardware computing devices cause the one or more hardware computing devices to perform operations including to:
rank identified samples from an initial unlabeled data pool detected by a sensor system, wherein samples in the initial unlabeled data pool are identified through unsupervised learning based on anomalies within individual samples, through a targeted query strategy;
facilitate human annotation of ranked samples;
optimize a model using a few-shot learning technique based on the initial unlabeled data pool and human annotated ranked samples; and
detecting and classifying an anomalous event using the model.
